# EUROPÄISCHE PATENTANMELDUNG

(11) **EP 4 386 039 A1**
(43) Veröffentlichungstag der Anmeldung: **19.06.2024**
(21) Anmeldenummer: 23212088.1
(22) Anmeldetag: 24.11.2023
(51) Int. Cl.: C08J 3/28, B32B 27/40, C08J 7/046

(54) **WASSERBASIERTE PRIMERSCHICHTEN**

(30) Priorität: 16.12.2022 DE 102022213767
(71) Anmelder: Benecke-Kaliko AG, 30419 Hannover (DE)
(72) Erfinder: Berger, Elena, 30165 Hannover (DE); Maack, Lisa, 30165 Hannover (DE); Kolb, Fabian, 30165 Hannover (DE); Jakob, Nora, 30165 Hannover (DE)
(74) Vertreter: Continental Corporation

(57) **Zusammenfassung**

Beschrieben wird ein Verbundgebilde, umfassend eine Trägerschicht, eine wasserbasierte Primerschicht und eine Excimer-Lackschicht, ein Verfahren zur Herstellung eines solchen Verbundgebildes, umfassend die Schritte des Bereitstellens einer Trägerschicht, des Aufbringens eines wasserbasierten Primers auf eine Oberfläche der Trägerschicht, des Aushärtens des wasserbasierten Primers, um eine ausgehärtete Primerschicht auszubilden, des Aufbringens eines Excimer-Lacks auf die ausgehärtete Primerschicht, und des Aushärtens des Excimer-Lacks. Beschreiben wird ferner ein Verbundgebilde erhältlich durch dieses Verfahren sowie die Verwendung solcher Verbundgebilde als Bespannungsmaterial.

## Beschreibung

Die vorliegende Erfindung betrifft ein Verbundgebilde, umfassend eine Trägerschicht, eine wasserbasierte Primerschicht und eine Excimer-Lackschicht, ein Verfahren zur Herstellung eines solchen Verbundgebildes, ein Verbundgebilde erhältlich durch dieses Verfahren sowie die Verwendung solcher Verbundgebilde als Bespannungsmaterial.

Aus dem Stand der Technik ist bekannt, dass elastische, prägbare Kunststoffe überwiegend mit wasserbasierenden, bzw. lösemittelbasierenden Lacken beschichtet werden. Zur Einstellung des Glanzgrades (GG) der lackierten Oberflächen werden in der Regel externe kunststoffbasierte oder mineralische Mattierungen verwendet. Eine Ausnahme hierzu bildet die Polymatttechnologie, die eine intrinsische Mattierung auf wässriger Basis ermöglicht. Diese Lacke enthalten in der Regel Wasser oder Lösungsmittel und werden thermisch getrocknet.

Lacke, die unter Einfluss von UV-Strahlung aushärten, werden auch als UV-Lacke bezeichnet. Diese UV-Lacke werden fast ausschließlich auf harten oder wenig elastischen Substraten eingesetzt, da sie in ausgehärteter Form als zu hart für elastische, prägbare Substrate wie z.B. Kunstleder betrachtet werden.

Nachteilig an der Verwendung solcher UV-Lacke ist demnach, dass diese nur schwer auf flexiblen Substraten, wie Kunstleder eingesetzt werden können. Ferner fordert die thermische Trocknung konventioneller wasser- oder lösungsmittelhaltiger Lacke einen hohen Energieverbrauch. Dazu sind die in solchen Lacken häufig enthaltenen organischen Komponenten meist hochvolatil was zu einem unangenehmen Geruch führen kann.

Lackierungen auf Wasserbasis, die auf elastischen prägbaren eingesetzt werden, weisen meist nur eine begrenzte Beständigkeit gegenüber aggressiven Chemikalien wie Alkoholen und Ketonen auf.

Matte, prägbare Oberflächen werden meist mit Hilfe von konventionellem Mattierungsmittel erzeugt, weisen jedoch dadurch meist nur eine temporäre Beständigkeit gegenüber Schmutz und farbigen Medien wie Kaffee, Tee oder Lippenstiften auf. Diese Nachteile bezüglich der Beständigkeit können jedoch durch sogenannte Excimer-Lacke überwunden werden, da diese eine hohe permanente Medienbeständigkeit aufweisen und deutlich beständiger gegenüber aggressiven Chemikalien sind. Zudem sind Excimer-Lacke meist frei von flüchtigen organischen Verbindungen (VOC).

Excimer-Lacke sind jedoch auch nicht frei von Nachteilen und zeigen oft schlechte Haftung auf elastischen und weichmacherhaltigen Substraten. Zudem stellt die meist mangelhafte Prägbarkeit der Excimer-Lacke ein weiteres Problem dar.

Um die Haftung der Excimer-Lacke auf Substraten zu verbessern, wird in der Regel zwischen Substrat und Excimer-Lackschicht ein Primer bzw. eine Primerschicht aufgetragen. Primer enthalten in der Regel einen dispergierten, aushärtbaren Feststoff, wodurch bei Aushärtung des Primers eine rauere Oberfläche erzielt werden kann, worauf der Excimer-anschließend besser haften kann.

Solche Primer wie vorstehend ausgeführt, basieren in der Regel auf einem dispergierbaren, aushärtbaren Feststoff, der in einem organischen Lösungsmittel vorliegt.

Der Einsatz solcher Primer hat jedoch den Nachteil, dass die enthaltenen organischen Lösungsmittel zum einen die mechanische Integrität, also die Haftung der Primerschicht auf dem Substrat, sowie die Haftung der Lackschicht auf der Primerschicht, negativ beeinflussen können und zum anderen nach Aushärten der Schichten weiterhin ein durch die enthaltenen VOCs hervorgerufener schlechter Geruch wahrnehmbar ist.

Es war daher die Aufgabe der vorliegenden Erfindung die Nachteile des Stands der Technik zu beheben. Insbesondere sollte ein Verbundgebilde bereitgestellt werden, wobei ein Excimer-Lack mechanisch integer auf elastischen und/oder weichmacherhaltigen Substraten appliziert ist. Das Verbundgebilde soll ferner vorzugsweise eine permanente Reinigungsfähigkeit gegenüber Anschmutzen mit gefärbten Textilien wie Jeansgewebe aufweisen und eine möglichst hohe Resistenz gegenüber aggressiven Chemikalien wie Alkoholen und Ketonen aufweisen. Die lackierte Oberfläche des Verbundgebildes sollte außerdem visuell, auditiv (geräuscharm bei Reibung) und olfaktorisch möglich positiv oder neutral wahrnehmbar und zudem prägbar sein. Insbesondere sollte möglichst kein wahrnehmbarer Geruch nach VOCs von dem Verbundgebilde ausgehen.

Diese Aufgabe wurde überraschend durch ein Verbundgebilde gemäß Anspruch 1 gelöst.

Vorteilhafte Weiterbildungen sind in den Unteransprüchen beschrieben.

Solche Verbundgebilde haben den Vorteil, dass sie eine Möglichkeit darstellen Excimer-Lack auf elastischen und weichmacherhaltigen Substraten wie flexiblen Folien zu applizieren, die dabei beständig gegenüber Schmutz, farbigen Medien und Lösemitteln wie Ketonen und Alkoholen sind. Zudem sind solche Verbundgebilde mittels unterschiedlicher Prägetechnologien prägbar. Zudem weisen solche Verbundgebilde eine schmutzresistente matte Oberflächen auf. Insbesondere wird durch die Vermeidung von organischen Lösungsmittel ein Verbundgebilde bereitgestellt, das olfaktorisch, visuell und auditiv neutral oder positiv wahrgenommen werden kann. Ferner reduziert sich durch die Vermeidung von organischen Lösungsmitteln aufwändig zu entsorgender Abfall. Ferner ist es möglich den Lackauftrag und die Lackaushärtung bei reduzierten Temperaturen bzw. niedrigeren Energien durchzuführen, was das Herstellungsverfahren solcher Verbundgebilde insgesamt vorteilhaft macht.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Erfindungsgemäß ist demnach ein Verbundgebilde nach Anspruch 1, umfassend in dieser Reihenfolge eine Trägerschicht, eine wasserbasierten Primerschicht und eine Excimer-Lackschicht.

Im Rahmen der vorliegenden Offenbarung bedeutet "wasserbasiert", dass der Primer vor dem Aushärten im Wesentlichen Wasser als Lösungsmittel enthält. Insbesondere enthält der Primer mindestens 50%, vorzugsweise mindestens 60% und ganz besonders bevorzugt 65 oder 70% Wasser, insbesondere 65 bis 70 % Wasser, bezogen auf das Gesamtgewicht des wasserbasierten Primers.

In einer Ausführungsform enthält der Primer vor dem Aushärten im neben Wasser keine anderen Lösungsmittel, insbesondere keine organischen Lösungsmittel (bis auf unvermeidbare Verunreinigungen).

Insbesondere enthält der Primer vor dem Aushärten im weniger als 20%, vorzugsweise weniger als 10% und ganz besonders bevorzugt weniger als 7,5% oder 5%, insbesondere 7,5 bis 5% organische Lösungsmittel, bezogen auf das Gesamtgewicht des wasserbasierten Primers.

In einer Ausführungsform enthält der Primer nach dem Aushärten im neben Wasser keine anderen Lösungsmittel, insbesondere keine organischen Lösungsmittel (bis auf unvermeidbare Verunreinigungen).

Insbesondere enthält der Primer nach dem Aushärten im weniger als 1%, vorzugsweise weniger als 0,1% und ganz besonders bevorzugt weniger als 0,001 % organische Lösungsmittel, bezogen auf das Trockengewicht der Primerschicht.

Ist ein organisches Lösungsmittel in dem wasserbasierten Primer enthalten, so umfasst dieses vorzugsweise Isopropanol, Methoxypropanol und/oder Propylenglycol.

Excimer-Lacke sind dem Fachmann bekannt und werden in der Regel zur Ausbildung einer matten Oberfläche eingesetzt.

Ein Excimer-Lack ist vorzugsweise ein Lack, vorzugsweise ein UV-Nanolack, wobei beim Aushärten des Lacks dieser zunächst an der Oberfläche mit einem Excimer-Laser bestrahlt wird, was zu einer oberflächlichen Polymerisation und damit Aushärtung führt. Durch die nur an der Oberfläche durchgeführte Aushärtung entsteht eine Volumenschrumpfung, die eine unterschiedlich starke Oberflächenfaltung bewirkt, was zu einer oberflächlichen Mattierung führt.

Vorzugsweise weisen solche Excimer-Laser monochromatische Wellenlängen von 172 nm, 222 nm und/oder 308 nm auf.

Der Excimer-Lack kann dann durch Bestrahlung mit UV-Mitteldrucklampe, UVC-Direktcurelampe, LED- und/oder ESH-Strahlung ausgehärtet werden.

Die vollständige Aushärtung kann je nach Lackrezeptur unter Stickstoffatmospähre oder ohne Stickstoffatmospähre erfolgen.

In einer weiteren bevorzugten Ausführungsform ist das erfindungsgemäße Verbundgebilde dadurch gekennzeichnet, dass die Trägerschicht eine Kunststofffolie umfasst.

Insbesondere umfasst eine solche Kunststofffolie ein Polyvinylchlorid (PVC), ein Polyurethan (PUR), ein thermoplastisches Polyolefin (TPO), ein thermoplastisches Polyurethan (TPU und/oder Polyester (PES).

Bei diesen Polymeren handelt es sich um die typischerweise zur Herstellung von Kunststofffolien und/oder Kunstledern eingesetzten Polymeren.

Ferner ist das erfindungsgemäße Verbundgebilde vorzugsweise dadurch gekennzeichnet, dass die wasserbasierte Primerschicht mindestens ein Polyurethan, mindestens ein Acrylatpolymer und/oder mindestens ein Copolymer davon umfasst.

In einer bevorzugten Ausführungsform ist das mindestens eine Polyurethan, das mindestens eine Acrylatpolymer und/oder das mindestens ein Copolymer davon in einer Menge von 50 bis 70 Gew.-%, vorzugsweise von 60 bis 65 Gew.-%, bezogen auf das der wasserbasierten Primerschicht, in dieser enthalten.

In einer weiter bevorzugten Ausführungsform enthält die wasserbasierte Primerschicht eine Mischung, umfassen mindestens ein Polyurethan und mindestens ein Acrylatpolymer, vorzugsweise in einem Gewichtsverhältnis von 1 zu 4 bis 1 zu 1.

Das erfindungsgemäße Verbundgebilde zeichnet sich ferner vorzugsweise dadurch aus, dass die wasserbasierte Primerschicht mindestens ein Mattierungsmittel, vorzugsweise ein siliziumbasiertes Mattierungsmittel, umfasst.

Mattierungsmittel sind gemeinhin Additive, die den Glanzgrad (GG) einer Oberflächenbeschichtung herabsetzen. Durch das Hinzufügen der Mattierungsmittel wird in der Regel eine gezielte Rauheit der Oberfläche erreicht, die eine diffuse Lichtstreuung bewirkt, wodurch die Oberfläche matt wirkt.

In einer bevorzugten Ausführungsform ist das mindestens eine Mattierungsmittel in einer Menge von 2 bis 15 Gew.-%, vorzugsweise von 5 bis 8 Gew.-%, bezogen auf das Trockengewicht der wasserbasierten Primerschicht, in dieser enthalten.

Das erfindungsgemäße Verbundgebilde zeichnet sich ferner vorzugsweise dadurch aus, dass die wasserbasierte Primerschicht mindestens ein Additiv ausgewählt aus der Gruppe, umfassend Entschäumungsmitteln, Verlaufmitteln, Photoinitiatoren und Verdickern umfasst.

Entschäumungsmittel werden regelmäßig eingesetzt, um unerwünschte Schaumbildung zu unterdrücken bzw. um gebildeten Schaum zu zerstören.

Bei dem Entschäumungsmittel handelt es sich bevorzugt um mindestens eine chemische Formulierung mit ausgeprägter Grenzflächenaktivität, vorzugsweise um Polysiloxane und/oder hydrophobe Feststoffe in Polyglykol.

In einer bevorzugten Ausführungsform ist das mindestens eine Entschäumungsmittel in einer Menge von 1 bis 5 Gew.-%, bezogen auf das Trockengewicht der wasserbasierten Primerschicht, in dieser enthalten.

Verlaufmittel werden in der Regel eingesetzt um eine Senkung der Oberflächenspannung der nassen, wasserbasierten Primerschicht zu bewirken, wodurch die Untergrundbenetzung und der Lackverlauf verbessert und Kraterbildung vermieden werden kann.

Bevorzugt wird als Verlaufmittel ein alkoxyliertes Acetylendiol eingesetzt.

In einer bevorzugten Ausführungsform ist das mindestens eine Verlaufmittel in einer Menge von 2 bis 10 Gew.-%, bezogen auf das Trockengewicht der wasserbasierten Primerschicht, in dieser enthalten.

Photoinitiatoren werden gemeinhin für den Start radikalischer Polymerisationen eingesetzt.

Bevorzugt wird als Photoinitiator ein Phosphinoxid und/oder ein Phosphinat, insbesondere Bis(2,4,6-Trimethylbenzoyl)phenylphosphinoxid, Ethyl(2,4,6-Trimethylbenzoyl)-Phenyl Phosphinat, 1-[4-(2-Hydroxyethoxyl)-Phenyl]-2-Hydroxy-Methylpropanon eingesetzt.

In einer bevorzugten Ausführungsform ist der mindestens eine Photoinitiator in einer Menge von 0,2 bis 5 Gew.-%, bezogen auf das Trockengewicht der wasserbasierten Primerschicht, in dieser enthalten.

Verdicker sind in der Regel Substanzen, die die Viskosität eines Mediums erhöhen.

Bevorzugt wird als Verdicker ein Assoziativverdicker, insbesondere ein assoziativer Polyurethanverdicker, eingesetzt.

In einer bevorzugten Ausführungsform ist der mindestens eine Verdicker in einer Menge von 0,5 bis 2,5 Gew.-%, bezogen auf das Trockengewicht der wasserbasierten Primerschicht, in dieser enthalten.

Das erfindungsgemäße Verbundgebilde zeichnet sich ferner vorzugsweise dadurch aus, dass die Excimer-Lackschicht mindestens einen Excimer-Lack umfasst.

Der Excimer-Lack umfasst vorzugsweise einen UV-Nanolack.

In einer Ausführungsform ist das erfindungsgemäße Verbundgebilde dadurch gekennzeichnet, dass die Excimer-Lackschicht lediglich aus dem Excimer-Lack besteht.

In einer anderen Ausführungsform ist das erfindungsgemäße Verbundgebilde dadurch gekennzeichnet, dass die Excimer-Lackschicht mindestens ein Additiv enthält.

Dabei umfasst das mindestens eine Additiv mindestens ein Polymerisationsprodukt mindestens eines Monomeren, insbesondere wobei das mindestens eine Monomer ein Acrylat, ein Urethanacrylat Monomer und/oder ein Siliconacrylat Monomer umfasst.

Durch Polymerisierung (Aushärtung) der Monomere kann damit ein Polymer direkt auf dem Substrat gebildet werden. Die Polymerisierung erfolgt dabei vorzugsweise über einen radikalischen Mechanismus, wobei die Polymerisation durch Hinzufügen eines Radikalstarters, insbesondere eines Photoinitiators, und/oder durch Bestrahlung mit UV-Licht gestartet wird.

Insbesondere umfasst das Acrylat ein Butylcyclohexylacrylat, ein Tripopylenglykoldiacrylat, ein Methylacrylat, ein Hexandioldiacrylat, ein 4-tert-Butylcyclohexylacrylat (V05-TBCH), ein Tripropylenglycoldiacrylat (V06-TPGDA), ein (5-Ethyl-1,3-dioxan-5-yl)methylacrylat (V07-CTFA), ein ethoxyliertes 1,6-Hexanedioldiacrylat (V10-HD2EODA), ein Neopentylglycol[2PO]diacrylat (V08-PNGPODA) und/oder Trimethylolpropan [15EO] Triacrylat (TMP15EOTA) (V09-Photomer 4185).

Das erfindungsgemäße Verbundgebilde zeichnet sich ferner vorzugsweise dadurch aus, dass die Excimer-Lackschicht ein Flächengewicht von 4,0 bis 10,0 g/m², vorzugsweise von 5,0 bis 9,0 g/m², besonders bevorzugt von 6,5 bis 7,5 g/m² aufweist.

Dabei können Flächengewichte von mehr als 10,0 g/m² die Flexibilität der Excimer-Lackschicht verschlechtern, während Flächengewichte von weniger als 4,0 g/m² optisch keinen optimalen Eindruck machen.

Das erfindungsgemäße Verbundgebilde zeichnet sich ferner vorzugsweise dadurch aus, dass die Excimer-Lackschicht eine matte Oberfläche mit einem Glanzgrad (GG) kleiner als 5 GU (60°) und kleiner als 10 GU (85°), vorzugsweise kleiner als 2 GU (60°) und kleiner als 5 GU (85°) aufweist.

Das erfindungsgemäße Verbundgebilde zeichnet sich insbesondere dadurch aus, dass die Excimer-Lackschicht eine matte Oberfläche mit einem Glanzgrad (GG) kleiner als 5 GU (60°) und kleiner als 10 GU (85°), vorzugsweise kleiner als 2 GU (60°) und kleiner als 5 GU (85°), ohne zusätzliche Präge aufweiset.

Eine optische Eigenschaft einer Oberfläche ist der Glanz. Dieser tritt auf wenn gerichtetes Licht auf eine Oberfläche trifft und reflektiert wird. Dabei werden die Messergebnisse in Glanzeinheiten (GU (= Gloss Units)) angegeben.

Die Bestimmung des Glasgrads erfolgt dabei gemäß DIN EN ISO 2813:2015-02.

Die Oberfläche des Verbundgebildes ist dabei bevorzugt dunkel.

Unter "dunkel" wird dabei vorzugsweise eine Färbung mit einem L Wert im LAB System von unter 25 verstanden.

Die vorliegende Erfindung betrifft außerdem ein Verfahren zur Herstellung eines Verbundgebildes, insbesondere wie vorstehend beschrieben, umfassend die Schritte:
- Bereitstellen einer Trägerschicht,
- Aufbringen eines wasserbasierten Primers auf eine Oberfläche der Trägerschicht,
- Aushärten des wasserbasierten Primers, um eine Primerschicht auszubilden,
- Aufbringen eines Excimer-Lacks auf die ausgehärtete Primerschicht, und
- Aushärten des Excimer-Lacks.

Dabei gelten alle vorstehend für das erfindungsgemäße Verbundgebilde aufgeführten Definitionen analog für das erfindungsgemäße Verfahren.

In einer weiteren bevorzugten Ausführungsform ist das erfindungsgemäße Verbundgebilde dadurch gekennzeichnet, dass die Trägerschicht eine Kunststofffolie umfasst.

Insbesondere umfasst eine solche Kunststofffolie, wie sie in dem erfindungsgemäßen Verfahren eingesetzt wird ein Polyvinylchlorid (PVC), ein Polyurethan (PUR), ein thermoplastisches Polyolefin (TPO), ein thermoplastisches Polyurethan (TPU) und/oder oder Polyester (PES).

Bei diesen Polymeren handelt es sich um die typischerweise zur Herstellung von Kunststofffolien und/oder Kunstledern eingesetzten Polymeren.

Ferner ist das erfindungsgemäße Verfahren vorzugsweise dadurch gekennzeichnet, dass die wasserbasierte Primerschicht mindestens ein Polyurethan, mindestens ein Acrylatpolymer und/oder mindestens ein Copolymer davon umfasst.

In einer bevorzugten Ausführungsform des erfindungsgemäßen Verfahrens ist das mindestens ein Polyurethan, das mindestens eine Acrylatpolymer und/oder das mindestens ein Copolymer davon in einer Menge von 40 bis 80 Gew.-%, vorzugsweise von 50 bis 60 Gew.-%, bezogen auf das Gesamtgewicht des wässrigen Primers, in diesem enthalten.

In einer weiter bevorzugten Ausführungsform des erfindungsgemäßen Verfahrens enthält die wasserbasierte Primerschicht eine Mischung, umfassen mindestens ein Polyurethan und mindestens ein Acrylatpolymer, vorzugsweise in einem Gewichtsverhältnis von 1 zu 1 bis 1 zu 4.

Im Wesentlichen umfasst der Schritt der Aushärtung des wasserbasierten Primers die Polymerisierung der Monomere, enthalten im wasserbasierten Primer, und/oder die Trocknung der aufgetragenen Primerschicht vorzugsweise durch Evaporieren der im Primer enthaltenen Lösemittel.

Das erfindungsgemäße Verfahren zeichnet sich ferner vorzugsweise dadurch aus, dass die wasserbasierte Primerschicht mindestens ein Mattierungsmittel, vorzugsweise ein siliziumoxidbasiertes oder acrylatbasiertes Mattierungsmittel, umfasst.

Mattierungsmittel sind gemeinhin Additive, die den Glanzgrad (GG) einer Oberflächenbeschichtung herabsetzen. Durch das Hinzufügen der Mattierungsmittel wird in der Regel eine gezielte Rauheit der Oberfläche erreicht, die eine diffuse Lichtstreuung bewirkt, wodurch die Oberfläche matt wirkt.

In einer bevorzugten Ausführungsform des erfindungsgemäßen Verfahrens ist das mindestens eine Mattierungsmittel in einer Menge von 0,5 bis 5 Gew.-%, vorzugsweise von 2 bis 3 Gew.-%, bezogen auf das Gesamtgewicht des wässrigen Primers, in diesem enthalten.

Das erfindungsgemäße Verfahren zeichnet sich ferner vorzugsweise dadurch aus, dass die wasserbasierte Primerschicht mindestens ein Additiv ausgewählt aus der Gruppe, umfassend Entschäumungsmitteln, Verlaufmitteln, Photoinitiatoren und Verdickern umfasst.

Entschäumungsmittel werden regelmäßig eingesetzt, um unerwünschte Schaumbildung zu unterdrücken bzw. um gebildeten Schaum zu zerstören.

Bei dem Entschäumungsmittel handelt es sich bevorzugt um mindestens eine chemische Formulierung mit ausgeprägter Grenzflächenaktivität, vorzugsweise um Polysiloxane, Mineralöle, und/oder hydrophobe Feststoffe in Polyglykol.

In einer bevorzugten Ausführungsform ist das mindestens eine Entschäumungsmittel in einer Menge von 0,1 bis 2 Gew.-%, bezogen auf das Gesamtgewicht des wässrigen Primers, in diesem enthalten.

Verlaufmittel werden in der Regel eingesetzt um eine Senkung der Oberflächenspannung der nassen, wasserbasierten Primerschicht zu bewirken, wodurch die Untergrundbenetzung und der Lackverlauf verbessert und Kraterbildung vermieden werden kann.

Bevorzugt wird als Verlaufmittel ein alkoxyliertes Acetylendiol eingesetzt.

In einer bevorzugten Ausführungsform ist das mindestens eine Verlaufmittel in einer Menge von 0,1 bis 2,5 Gew.-%, bezogen auf das Gesamtgewicht des wässrigen Primers, in diesem enthalten.

Photoinitiatoren werden gemeinhin für den Start radikalischer Polymerisationen eingesetzt.

Bevorzugt wird als Photoinitiator ein Phosphinoxid und/oder ein Phosphinat, insbesondere Bis(2,4,6-Trimethylbenzoyl)phenylphosphinoxid, Ethyl(2,4,6-Trimethylbenzoyl)-Phenyl Phosphinat, 1-[4-(2-Hydroxyethoxyl)-Phenyl]-2-Hydroxy-Methylpropanon eingesetzt.

In einer bevorzugten Ausführungsform des erfindungsgemäßen Verfahrens ist der mindestens eine Photoinitiator in einer Menge von 0,2 bis 5 Gew.-%, bezogen auf Gesamtgewicht des wässrigen Primers, in diesem enthalten.

Verdicker sind in der Regel Substanzen, die die Viskosität eines Mediums erhöhen.

Bevorzugt wird als Verdicker ein Assoziativverdicker, insbesondere ein assoziativer Polyurethanverdicker eingesetzt

In einer bevorzugten Ausführungsform des erfindungsgemäßen Verfahrens ist der mindestens eine Verdicker in einer Menge von 0,1 bis 1 Gew.-%, bezogen auf Gesamtgewicht des wässrigen Primers, in diesem enthalten.

Das erfindungsgemäße Verfahren zeichnet sich ferner vorzugsweise dadurch aus, dass die Excimer-Lackschicht mindestens einen Excimer-Lack umfasst.

Der Excimer-Lack umfasst vorzugsweise einen UV-Nanolack.

In einer Ausführungsform ist das erfindungsgemäße Verfahren dadurch gekennzeichnet, dass die Excimer-Lackschicht lediglich aus dem Excimer-Lack besteht.

In einer anderen Ausführungsform ist das erfindungsgemäße Verfahren dadurch gekennzeichnet, dass die Excimer-Lackschicht mindestens ein Additiv enthält.

Dabei umfasst das mindestens eine Additiv mindestens ein Polymerisationsprodukt mindestens eines Monomeren, insbesondere wobei das mindestens eine Monomer ein Acrylat, ein Urethanacrylat Monomer und/oder ein Siliconacrylat Monomer umfasst.

Durch Polymerisierung (Aushärtung) der Monomere kann damit ein Polymer direkt auf dem Substrat gebildet werden. Die Polymerisierung erfolgt dabei vorzugsweise über einen radikalischen Mechanismus, wobei die Polymerisation durch Hinzufügen eines Radikalstarters, insbesondere eines Photoinitiators, und/oder durch Bestrahlung mit UV-Licht gestartet wird.

Insbesondere umfasst das Acrylat ein Butylcyclohexylacrylat, ein Tripopylenglykoldiacrylat, ein Methylacrylat, ein Hexandioldiacrylat, ein 4-tert-Butylcyclohexylacrylat (V05-TBCH), ein Tripropylenglycoldiacrylat (V06-TPGDA), ein (5-Ethyl-1,3-dioxan-5-yl)methylacrylat (V07-CTFA), ein ethoxyliertes 1,6-Hexanedioldiacrylat (V10-HD2EODA), ein Neopentylglycol[2PO]diacrylat (V08-PNGPODA) und/oder Trimethylolpropan [15EO] Triacrylat (TMP15EOTA) (V09-Photomer 4185).

Das erfindungsgemäße Verfahren ist ferner vorzugsweise dadurch gekennzeichnet, dass die Aushärtung des wasserbasierten Primers eine thermische Trocknung und anschließende UV-Bestrahlung umfasst.

Dies bewirkt vorzugsweise eine Evaporierung der enthaltenen Lösungsmittel und/oder die Polymerisierung der im wasserbasierten Primer enthaltenen Polymere.

Das erfindungsgemäße Verfahren ist ferner vorzugsweise dadurch gekennzeichnet, dass die Aushärtung des Excimer-Lacks folgende Schritte umfasst:
- Bestrahlung der Lackoberfläche mit einem Excimer-Laser, und
- Bestrahlung des Excimer-Lacks mit UV-, LED- und/oder ESH-Strahlung.

Durch die nur an der Oberfläche durchgeführte Aushärtung entsteht eine Volumenschrumpfung, die eine unterschiedlich starke Oberflächenfaltung bewirkt, was zu einer oberflächlichen Mattierung führt.

Der Excimer-Lack kann dann durch Bestrahlung mit UV-, LED- und/oder ESH-Strahlung ausgehärtet werden.

Vorzugsweise weisen solche Excimer-Laser monochromatische Wellenlängen von 172 nm, 222 nm und/oder 308 nm auf.

Die vorliegende Erfindung betrifft ferner ein Verbundgebilde, erhältlich durch das vorstehend beschriebene Verfahren.

Dabei gelten alle vorstehend für das erfindungsgemäße Verbundgebilde aufgeführten Definitionen analog für das Verbundgebilde, erhältlich durch das vorstehend beschriebene Verfahren.

Die vorliegende Erfindung betrifft ferner die Verwendung eines Verbundgebildes, wie vorstehend beschrieben und/oder erhältlich durch das vorstehend beschriebene Verfahren als Bespannungsmaterial im Automobilinterieur, für medizinische Liegen, für Fitnessgeräte, für Bänke, für Stühle, für Polstermöbel, sowie geprägten und/oder harten Substraten.

Die Erfindung wird nachfolgend anhand von nicht beschränkenden Beispielen näher erläutert.

### Beispiele

In Tabelle 1 ist eine mögliche Mischung für einen wasserbasierten Primer zum Auftragen auf ein Substrat beispielhaft beschrieben.

**Tabelle 1: Beispielhafte Zusammensetzung für einen wasserbasierten Primer zum Auftragen auf ein Substrat.**

| **Inhaltsstoff und Funktion** | **Menge in KG** |
|---|---|
| Anionisches Acrylatpolymer (UCECOAT 2807 FS=35%) | 50 |
| Aliphatische, polycarbonathaltige anionische Polyurethandispersion (Bayhydrol UH 2648 FS=35%) | 15,700 |
| wässriges siliziumbasiertes Mattierungsmittel (Finma-Sil 30X-5HM FS=22%) | 10 |
| Alkoxyliertes acetylendiol (Verlaufmittel) (PERMUTEX LA-13-863 FS=20,9%) | 6,700 |
| Mischung schaumzerstörender Polysiloxane und hydrophober Feststoffe in Polyglykol (Entschäumer) (BYK-021 FS=97%) | 0,700 |
| Lösung schaumzerstörender Polymere und Polysiloxane (Entschäumer/Entlüfter) (BYK-A-530 FS=75%) | 0,700 |
| BIS(2,4,6-TRIMETHYLBENZOYL) PHENYLPHOSPHINE OXIDE (Photoinitiator für radikalische Polymerisationen) (Omnirad 819DW FS=45%) | 0,500 |
| Verdicker (Verdickerbatch Lepton VL IPA-H20 FS=30%) | 1 |
| Lepton Paste VL FS=60% | 0,500 |
| PERMUTIT WASSER | 0,250 |
| ISOPROPANOL FS=0,1% | 0,250 |

In Tabelle 2 ist eine mögliche Mischung für einen Excimer-Lack zum Auftragen auf eine wasserbasierte Primerschicht beispielhaft beschrieben.

**Tabelle 2: Beispielhafte Zusammensetzung für eine Excimer-Lackschicht zum Auftragen auf eine wasserbasierte Primerschicht.**

| **Inhaltsstoff** | **Menge in KG** |
|---|---|
| UV-Nanolack 82520083791 FS = 100% | 50 |
| 4-tert-butylcyclohexyl acrylat (Laromer LR 8887 FS = 100%) | 2,500 |
| Urethan-Acrylat (SUO-300 FS = 100%) | 2,500 |
| Silikon-Acrylat (Tego Rad 2800 FS=100%) | 0,400 |

In Tabelle 3 ist eine mögliche Mischung für einen lösemittelbasierten Primer zum Auftragen auf ein Substrat beispielhaft beschrieben.

**Tabelle 3: Beispielhafte Zusammensetzung für einen lösemittelbasierten Primer zum Auftragen auf ein Substrat.**

| **Inhaltsstoff und Funktion** | **Menge in KG** |
|---|---|
| Urethan Lack (LEATHEROID LU-4307 EU(HT) FS=14,1%) | 40 |
| Acrylat (Rowaflon M-74770 FS=16,3%) | 1,16 |
| Lösemittel (1,3-Dioxolan Ultra rein FS=0,1%) | 0,14 |
| Lösungsmittelhaltige Mattpaste (Rowasil 43705 FS=19,3%) | 0,4 |
| Polymethylmethacrylat Kügelchen (Spheromers CA10 FS=100%) | 0,3 |
| Polyisocyanat Vernetzter (Leatheroid LU-3017 CNT FS=80%) | 2 |

In Tabellen 4 bis 9 sind mögliche Mischungen für einen Excimer-Lack zum Auftragen auf eine wasserbasierte Primerschicht beispielhaft beschrieben.

**Tabelle 4: Beispielhafte Zusammensetzung für eines Excimer-Lackschicht (V05) zum Auftragen auf ein Substrat.**

| **Inhaltsstoff und Funktion** | **Menge in KG** |
|---|---|
| 4-tert-Butylcyclohexyl Acrylat (Laromer TBCH FS=100%) | 40 |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Bis(2,4,6-Trimethylbenzoyl)phenylphosphine oxide and Ethyl(2,4,6-Trimethylbenzoyl)-phenyl phosphinate Photoinitiator (Omnirad 2100 FS=100%) | 0,5 |

**Tabelle 5: Beispielhafte Zusammensetzung für eines Excimer-Lackschicht (V06) zum Auftragen auf ein Substrat.**

| **Inhaltsstoff und Funktion** | **Menge in KG** |
|---|---|
| Tripropylenglycoldiacrylat (Laromer TPGDA FS=100%) | 40 |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Bis(2,4,6- Trimethylbenzoyl)phenylphosphine oxide and Ethyl(2,4,6-Trimethylbenzoyl)-phenyl phosphinate Photoinitiator (Omnirad 2100 FS=100%) | 0,5 |

**Tabelle 6: Beispielhafte Zusammensetzung für eines Excimer-Lackschicht (V07) zum Auftragen auf ein Substrat.**

| **Inhaltsstoff und Funktion** | **Menge in KG** |
|---|---|
| Trimethylolpropan Formal Monoacrylat (Laromer LR 8887 FS=100%) | **40** |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Bis(2,4,6- Trimethylbenzoyl)phenylphosphine oxide and Ethyl(2,4,6-Trimethylbenzoyl)-phenyl phosphinate Photoinitiator (Omnirad 2100 FS=100%) | 0,5 |

**Tabelle 7: Beispielhafte Zusammensetzung für eines Excimer-Lackschicht (V08) zum Auftragen auf ein Substrat.**

| **Inhaltsstoff und Funktion** | **Menge in KG** |
|---|---|
| Neopentylglycol [2PO] Diacrylat (Photomer 4127 FS=100%) | **40** |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Bis(2,4,6- Trimethylbenzoyl)phenylphosphine oxide and Ethyl(2,4,6-Trimethylbenzoyl)-phenyl phosphinate Photoinitiator (Omnirad 2100 FS=100%) | 0,5 |

**Tabelle 8: Beispielhafte Zusammensetzung für eines Excimer-Lackschicht (V09) zum Auftragen auf ein Substrat.**

| **Inhaltsstoff und Funktion** | **Menge in KG** |
|---|---|
| 2-[[(Butylamino)carbonyl]oxy]ethylacrylat (Photomer 4185 FS=100%) | **40** |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Bis(2,4,6- Trimethylbenzoyl)phenylphosphine oxide and Ethyl(2,4,6-Trimethylbenzoyl)-phenyl phosphinate Photoinitiator (Omnirad 2100 FS=100%) | 0,5 |

**Tabelle 9: Beispielhafte Zusammensetzung für eines Excimer-Lackschicht (V10) zum Auftragen auf ein Substrat.**

| **Inhaltsstoff und Funktion** | **Menge in KG** |
|---|---|
| Hexandiol [2EO] Diacrylat (Photomer 4361 FS=100%) | **40** |
| Urethanmodifiziertes Acrylat (Laromer UA 9072 FS=100%) | 40 |
| Aminmodifiziertes Acrylat (Laromer PO 9103 FS=100%) | 20 |
| Verlaufshilfsmittel Copolyacrylat (EFKA FL 3741 FS=95%) | 1 |
| Blend of Bis(2,4,6- Trimethylbenzoyl)phenylphosphine oxide and Ethyl(2,4,6- Trimethylbenzoyl)-phenyl phosphinate Photoinitiator (Omnirad 2100 FS=100%) | 0,5 |

In Tabelle 10 werden 2 K Lösemittel PUR Primer (siehe Tabellen) und wässrige UV Primer, wie oben beschrieben in Verbindung mit 100% Excimer-Lack Beispielrezepturen mit unterschiedlichen Monomeren bezüglich mehrerer Faktoren miteinander verglichen.

**Tabelle 10: Vergleich von lösungsmittelbasierten Primern mit wasserbasierten Primern, lackiert mit 100% Excimer UV Lacken, die jeweils in einem Monomer variieren.**

| **Proben Nummer** | | **Auslaufvis kosität DIN EN ISO 2431 Ausgabeda tum: 2020-02-01** | **Glanzgrad DIN EN ISO 2813 Ausgabedat um: 2015-02-01** | | **Geruch VDA 270 C3 2022-05-01** | **Anschmutzen und Reinigen Mit Kaffee in Anlehnung an DIN EN 15973 2011-05-01** | | | | | **Dauerbiegefestigk eit DIN EN ISO 32100 2019-02-01** | |
|---|---|---|---|---|---|---|---|---|---|---|---|---|
| | | | **60°** | | | **GM: 2,5g Kaffee auf 240 mL dest. Wasser; 60 °C** - **80 °C 30min Einwirkzeit** | | | | | **100000** Touren 23 **°C** | **10000** Touren **-10 °C** |
| | | **Zeit (4 mm) in s** | **vor Prä gen** | **nach Präg en** | **Note** | **Visuell** | **dL** | **da** | **db** | **dE** | **Note** | **Note** |
| Primer Art | Monomer in 100% Excimer - Lack | | | | | | | | | | | |
| Lösemittel- 2 K PUR Beispiel Rezeptur Tabelle 3 | Beispiel Rezeptur V05 mit 4-tert-butylcyclohexyl acrylat Tabelle4 | 124 | 1,8 | 1,5 | 3 | Schatte n erkenn bar | -0,90 | - 0,37 | 3,32 | 3,45 | 0 | 0 |
| Lösemittel- 2 K PUR Beispiel Rezeptur Tabelle 3 | Beispiel Rezeptur V06 mit tripropylene glycol diacrylate Tabelle 5 | 138 | 1,8 | 1,3 | 3 | kein Schatte n | -0,19 | - 0,09 | 0,89 | 0,91 | 0 | 0 |
| Lösemittel- 2 K PUR Beispiel Rezeptur Tabelle 3 | Beispielrezeptur V07 mit (-5-ethyl-1 ,3-dioxan-5-yl) methyl acrylate Tabelle 6 | 133 | 0,9 | 0,6 | 3,5 | Schatte n schwac h | -0,52 | - 0,22 | 2,21 | 2,28 | 0 | 0 |
| Lösemittel- 2 K PUR Beispiel Rezeptur Tabelle 3 | Beispielrezeptur V08 mit Neopentylglycol [2PO] Diacrylat Tabelle 7 | 136 | 1,6 | 1,2 | 2,5 | kein Schatte n | -0,19 | 0,00 | 0,55 | 0,58 | 0 | 0 |
| Lösemittel- 2 K PUR Beispiel Rezeptur Tabelle 3 | Beispielrezeptur V09 mit Hexandiol [2EO] Diacrylat Tabelle 8 | 139 | 0,5 | 0,4 | 3,5 | Schatte n erkenn bar | -2,11 | - 0,56 | 7,23 | 7,55 | 0 | 0/1 |
| Lösemittel- 2 K PUR Beispiel Rezeptur Tabelle 3 | Beispielrezeptu V10 mit ethoxylated 1,6-hexanediol diacrylate (V10-HD2EODA) Tabelle 9 | 139 | 1,4 | 1,1 | 3 | Schatte n schwac h | -2,79 | - 0,12 | 2,02 | 3,44 | 0 | 0 |
| Wässriger UV Rezeptur Tabelle 1 | Beispiel Rezeptur V05 mit 4-tert-butylcyclohexyl acrylat Tabelle4 | 124 | 3,1 | 1,6 | 2,5 | Schatte n erkenn bar | -2,67 | - 0,23 | 2,09 | 3,39 | 0 | 0 |
| Wässriger UV Rezeptur Tabelle 1 | Beispiel Rezeptur V06 mit tripropylene glycol diacrylate Tabelle 5 | 138 | 1,3 | 1,1 | 3 | kein Schatte n | -0,17 | 0,00 | 0,43 | 0,46 | 1 | 0/1 |
| Wässriger UV Rezeptur Tabelle 1 | Beispielrezeptur V07 mit (-5-ethyl-1,3-dioxan-5-yl) methyl acrylate Tabelle 6 | 133 | 0,8 | 0,6 | 2 | Schatte n schwac h | -0,41 | - 0,13 | 1,49 | 1,55 | 0 | 0/1 |
| Wässriger UV Rezeptur Tabelle 1 | Beispielrezeptur V08 mit Neopentylglycol [2PO] Diacrylat Tabelle 7 | 136 | 1,3 | 1,0 | 2,5 | kein Schatte n | -0,04 | 0,00 | 0,31 | 0,31 | 0 | 0/1 |
| Wässriger UV Rezeptur Tabelle 1 | Beispielrezeptur V09 mit Hexandiol [2EO] Diacrylat Tabelle 8 | 139 | 0,5 | 0,3 | 2,5 | Schatte n erkenn bar | -4,22 | - 0,38 | 6,08 | 7,41 | 0 | 1 |
| Wässriger UV Rezeptur Tabelle 1 | Beispielrezeptu V10 mit ethoxylated 1,6-hexanediol diacrylate (V10-HD2EODA) Tabelle 9 | 139 | 1,5 | 1,0 | 3 | Schatte n schwac h | -0,52 | - 0,13 | 1,27 | 1,37 | 1 | 1 |

In Tabelle 11 werden 2 K Lösemittel PUR Primer und wässrige UV Primer in Verbindung mit 100% Excimer-Lack, der unterschiedliche Monomere enthält, bezüglich mehrerer Faktoren miteinander verglichen

**Tabelle 11: Vergleich von lösungsmittelbasierten Primern mit wasserbasierten Primern**

| **Wärmebeständigkeit DIN EN 12280-1:1997** | | | | | | | | | | **Anschmutz / Reinigungsverhalten VDA 230-212 mit EMPA128 1000 Touren** | | **Farbechtheit gegen Reiben in Anlehnung an DIN EN ISO 105-X12:2016** | |
|---|---|---|---|---|---|---|---|---|---|---|---|---|---|
| **Die Proben werden bei unterschiedlichen Temperatuten in einer Offen gelagert und anschließen farblich gegen eine unbelastete Probe vermessen. Farbdifferenz wird dokumentiert.** | | | | | | | | | | | | | |
| | | **90°C** | | | | **100°C** | | | | **Bewertung Graumassstab nach ISO 105-A03** | | **Bewertung Graumassstab nach ISO 105-A03** | |
| Primer Art | Monomer in 100% Excimer - Lack | **dL** | **da** | **db** | **dE** | **dL** | **da** | **db** | **dE** | **ungereinigt** | **gereinigt** | **100% Ethan ol** | **100% Isopropa nol** |
| Lösemittel- 2 K PUR Beispiel Rezeptur Tabelle 3 | Beispiel Rezeptur V05 mit 4-tert-butylcyclohexyl acrylat Tabelle4 | -0,15 | -0,17 | 0,9 8 | 1,0 0 | -0,16 | -0,26 | 1,5 2 | 1,55 | - | - | 3/4 | 4 |
| Lösemittel- 2 K PUR Beispiel Rezeptur Tabelle 3 | Beispiel Rezeptur V06 mit tripropylene glycol diacrylate Tabelle 5 | -0,23 | -0,13 | 0,8 4 | 0,8 8 | -0,34 | -0,18 | 1,3 8 | 1,43 | 3 | 4 | 4/5 | 4/5 |
| Lösemittel- 2 K PUR Beispiel Rezeptur Tabelle 3 | Beispielrezeptur V07 mit (-5-ethyl-1,3-dioxan-5-yl) methyl acrylate Tabelle 6 | -0,23 | 0,10 | 0,8 9 | 0,9 2 | -0,3 | -0,15 | 1,3 7 | 1,41 | 1/2 | 3 | 2/3 | 2/3 |
| Lösemittel- 2 K PUR Beispiel Rezeptur Tabelle 3 | Beispielrezeptur V08 mit Neopentylglycol [2PO] Diacrylat Tabelle 7 | -0,26 | -0,12 | 0,8 4 | 0,8 8 | -0,28 | -0,11 | 1,1 4 | 1,17 | 3 | 3 | 4/5 | 5 |
| Lösemittel- 2 K PUR Beispiel Rezeptur Tabelle 3 | Beispielrezeptur V09 mit Hexandiol [2EO] Diacrylat Tabelle 8 | -0,27 | -0,09 | 0,9 6 | 1,0 0 | -0,19 | -0,13 | 1,3 0 | 1,32 | 1 | 1/2 | 2/3 | 2/3 |
| Lösemittel- 2 K PUR Beispiel Rezeptur Tabelle 3 | Beispielrezeptu V10 mit ethoxylated 1,6-hexanediol diacrylate (V10-HD2EODA) Tabelle 9 | -0,16 | -0,08 | 0,8 1 | 0,8 2 | -0,23 | -0,15 | 1,4 2 | 1,44 | 2/3 | 4 | 4/5 | 5 |
| Wässriger UV Rezeptur Tabelle 1 | Beispiel Rezeptur V05 mit 4-tert-butylcyclohexyl acrylat Tabelle4 | -2,30 | 0,04 | 0,8 0 | 2,4 3 | -0,15 | -0,10 | 1,4 2 | 1,43 | - | - | 4 | 4 |
| Wässriger UV Rezeptur Tabelle 1 | Beispiel Rezeptur V06 mit tripropylene glycol diacrylate Tabelle 5 | -0,20 | 0,00 | 0,4 6 | 0,5 0 | -0,33 | -0,05 | 0,9 2 | 0,97 | 3 | 4 | 4/5 | 4/5 |
| Wässriger UV Rezeptur Tabelle 1 | Beispielrezeptur V07 mit (-5-ethyl-1,3-dioxan-5-yl) methyl acrylate Tabelle 6 | -0,14 | -0,09 | 0,7 9 | 0,8 0 | -0,29 | -0,08 | 1,2 6 | 1,29 | 1/2 | 2/3 | 2/3 | 2/3 |
| Wässriger UV Rezeptur Tabelle 1 | Beispielrezeptur V08 mit Neopentylglycol [2PO] Diacrylat Tabelle 7 | -0,13 | -0,03 | 0,5 1 | 0,5 2 | -0,23 | -0,02 | 0,8 8 | 0,90 | 3 | 4/5 | 4/5 | 5 |
| Wässriger UV Rezeptur Tabelle 1 | Beispielrezeptur V09 mit Hexandiol [2EO] Diacrylat Tabelle 8 | -0,20 | -0,03 | 0,7 7 | 0,7 9 | -0,31 | -0,01 | 1,1 7 | 1,21 | 1 | 1/2 | 2/3 | 3 |
| Wässriger UV Rezeptur Tabelle 1 | Beispielrezeptu V10 mit ethoxylated 1,6-hexanediol diacrylate (V10-HD2EODA) Tabelle 9 | -0,18 | -0,05 | 0,7 2 | 0,7 4 | -0,28 | -0,05 | 1,0 4 | 1,07 | 2/3 | 4 | 4/5 | 5 |

In Tabelle 12 wird der Einfluss des Flächengewichts des Excimer-Lackschicht hinsichtlich verschiedener Oberflächeneigenschaften untersucht. Alle Muster wurden mit dem Beispiel lack, wie in Tabelle 2 beschrieben lackiert.

**Tabelle 12: Vergleich verschiedener Excimer-Lackschichten unterschiedlicher Flächengewichte.**

| | | | **Glanzgrad DIN EN ISO 2813 Ausgabedatum: 2015-02-01 Auf dunklem Substrat L<25** | | **Glanzgrad DIN EN ISO 2813 Ausgabedatum: 2015-02-01 Auf hellem Substrat L>60** | | **Optik** | **Anschmutz / Reinigungsverhalten VDA 230-212 mit EMPA128** | |
|---|---|---|---|---|---|---|---|---|---|
| | | | | | | | | **1000 Touren** | |
| **Musterbezei chnung** | **Raster walze Gravur** | **Auflage [nass] g/m²** | **60°** | | **60°** | | **Beurteilung Prägetiefe visuelle Eindruck** | **Bewertung Graumassstab nach ISO 105-A03** | |
| | | | **vor Prägen** | **nach Prägen** | **vor Prägen** | **nach Prägen** | | **ungereinigt** | **gereinigt** |
| LM-030-1 | 54er Stahl | 7,5 | 1,2 | 1,0 | 2,1 | 1,9-2,0 | i.O | 3 | 4/5-5 |
| LM-030-2 | 60 Stahl | 6,5 | 1,2-1,3 | 1,1 | 2,2 | 2,0 | i.O (nicht optimal) | 3 | 5 |
| LM-030-3 | 70 Stahl | 6,8 | 1,2 | 1,0-1,1 | 2,2 | 2,0 | n.i.O | 3 | 4-4/5 |
| LM-030-4 | 70 Keramik | 5,8 | 1,3-1,4 | 1,1 | 2,3-2,4 | 2,4 | n.i.O | 3 | 4/5 |
| LM-030-5 | 80 Keramik | 3,6 | 1,5-1,6 | 1,2 | 2,4-2,6 | 2,2 | n.i.O | 3 | 4-4/5 |
| LM-030-6 | 54 Keramik | 7,1 | 1,1 | 0,9 | 2,1-2,2 | 2,0 | i.O (beste Variante) | 3 | 4-4/5-5 |

In Tabelle 13 werden Verbundgebilde mit einem PVC Kunstleder Substrat nach mehreren Faktoren bewertet (gemäß aktuelle Daimler Spezifikation DBL 5348)

**Tabelle 13: Bewertung von Verbundgebilden mit PVC Kunstleder als Substrat**

| **Versuchsaufbau Bemerkung** | | | **PVC Kunstleder lackiert an der Produktionsanlage mit 4 Schichten wässrigen Lack:** | | **PVC Kunstleder lackiert in der Produktion mit 2 Schichten Lack:** | | | | | | | | |
|---|---|---|---|---|---|---|---|---|---|---|---|---|---|
| | | | | | **1 Schicht 2,5 g/ m² wässrige UV Primer (gern Tabelle 1)** | | | | | | | | |
| | | | **1 Schicht 7g/m² acrylatbasiereter Lack** | | | | | | | | | | |
| | | | | | **2 Schicht 7g/ m² 100° UV-Lack (gem. Tabelle 2)** | | | | | | | | |
| | | | **2 Schicht 2,5g/ m² Polyester PUR Primer** | | | | | | | | | | |
| | | | **3 und 4 Schicht 5,591 m²' PUR Lack** | | | | | | | | | | |
| | | | **Alle Materialien waren mit selben Prägewerkzeug und an selben Prägemaschine mit einer Struktur versehen und anschließend geprüft.** | | | | | | | | | | |
| **Fertigware** | | | **EEF2721053** | **EF2721044** | **EF2721041** | **EF2721043** | | | | | | | |
| | | | **100328226** | **100323844** | **100323837** | **100323841** | | | | | | | |
| | | | **wässrig** | **wässrig** | **UV** | **UV** | | | | | | | |
| **Merkmal** | **Bemerkung** | **Sollwert** | ***Dunkel L*<*25*** | ***Hell L*>*60*** | ***Dunkel L<25*** | ***Hell L*>*60*** | | | | | | | |
| **Anschmutz-und Reinigungsverhalten 1-Zyklus** | **DBL5348 9.4** | | | | | | | | | | | | |
| **Angeschmutzt 1X** | **24h RT** | ≥3 | - | 2,5 | - | 4 | | | | | | | |
| **Gereinigt** | **24h RT** | ≥4,5 | - | 4 | - | 5 | | | | | | | |
| **Anschmutz-und Reinigungsverhalten 5-Zyklen** | **DBL5348 9.4** | | | | | | | | | | | | |
| **Angeschmutzt 5X** | **24h RT** | ≥3 | - | 1,5 | - | 3,5 | | | | | | | |
| **Gereinigt** | **24h RT** | ≥4 5 | - | 3 | - | 4,5 | | | | | | | |
| **Nox Beständigkeit** | | ≥3 | - | 2,5 | - | 2,5 | | | | | | | |
| **Aminbeständigkeit** | | DBL 5348 | | | | | | | | | | | |
| **Kontaktverfärbung mit Aminen** | | ≥ GM-Stufe 4,5 | 5 | 3 | 5 | 4 | | | | | | | |
| **Heißlichtechtheit** | **DIN EN ISO 105-B06** | ≥ Note 7 | 7 | 7,5 | 7,5 | 8 | | | | | | | |
| | | GG vorher | 0,8 | 1,8 | 0,9 | 2,1 | | | | | | | |
| | | GG nachher | 1,4 | 2,2 | 1,2 | 1,9 | | | | | | | |
| | | DGG | 0,6 | 0,4 | 0,3 | 0,2 | | | | | | | |
| Heißlichtalterung (3 Zyklen) | DIN EN ISO 105-B06 | ≥ GM-Stufe 3 | 3,5 | 4,5 | 4 | 4,5 | | | | | | | |
| | | GG vorher | 0,8 | 1,8 | 0,9 | 2,1 | | | | | | | |
| | | GG nachher | 1,9 | 2,5 | 1,4 | 2,2 | | | | | | | |
| | | DGG | 0,8 | 0,7 | 0,5 | 0,1 | | | | | | | |

| **Abriebsfestigkeit** | **DBL 5306.4.1** | | | | | | | | | | | | |
|---|---|---|---|---|---|---|---|---|---|---|---|---|---|
| **Beurteilung des Reibgewebes** | | | | | | | | | | | | | |
| **-trocken** | | GM-Stufe 4-5 | 5 | 5 | 5 | 5 | | | | | | | |
| **-nass** | | GM-Stufe 5 | 5 | 5 | 5 | 5 | | | | | | | |
| **-MB-Fleckenentferner** | | GM-Stufe 4 | 5 | 5 | 5 | 5 | | | | | | | |
| **-MB-Glasreiniger** | | GM-Stufe 4 | 5 | 5 | 5 | 5 | | | | | | | |
| **-Petroleumbenzin** | | GM-Stufe 4 | 5 | 5 | 5 | 5 | | | | | | | |
| **-MB-Kunststoffreiniger** | | GM-Stufe 4 | 5 | 5 | 5 | 5 | | | | | | | |
| **Ethanol 99,8%** | | GM-Stufe 4 | 2 | 2 | 5 | 5 | | | | | | | |
| **Beurteilung der Oberfläche** | | | | | | | | | | | | | |
| **-trocken** | | GM-Stufe 4-5 | 5 | 5 | 5 | 5 | | | | | | | |
| **-nass** | | GM-Stufe 5 | 5 | 5 | 5 | 5 | | | | | | | |
| **-MB-Fleckenentferner** | | GM-Stufe 4 | 4,5 | 5 | 5 | 5 | | | | | | | |
| **-MB-Glasreiniger** | | GM-Stufe 4 | 5 | 5 | 5 | 5 | | | | | | | |
| **-Petroleumbenzin** | | GM-Stufe 4 | 5 | 5 | 5 | 5 | | | | | | | |
| **-MB-Kunststoffreiniger** | | GM-Stufe 4 | 5 | 5 | 5 | 5 | | | | | | | |
| **Ethanol 99,8%** | | GM-Stufe 4 | 4 | 4 | 5 | 5 | | | | | | | |

| **Gakuschin Abrieb** | | **30000 Touren 9,6N** | | keine Zerstörung | | n.i.o | | n.i.o | | i.O | | i.O | |
|---|---|---|---|---|---|---|---|---|---|---|---|---|---|
| **Anlieferzustand** | **ISO 32100** | | | L | Q | L | Q | | L | Q | L | | Q |
| **Dauerbiegefesfigke it RT 100.000T** | | | Note 2 | 0/0/2 | 0 | 0 | 0 | | 0 | 0 | 1 | | 1 |
| **Dauerbiegefestigkeit -20°C 10.000T** | | | Note 2 | 2/2/3 | 2/2/5 | 2/2/3 | 2/3/3 | | 2 | 2 | 2 | | 2 |

| **nach Öllagerung** | | | | L | Q | L | Q | | L | Q | L | | Q |
|---|---|---|---|---|---|---|---|---|---|---|---|---|---|
| **Dauerbiegefestigkeit RT 100.000T** | | | Note 2 | 2 | 2 | 0 | 0 | | 1 | 0 | 1/1/2 | | 1 |
| **Deuerbiegefestigke it: -10°C 10.000T** | | | Note 2 | 2 | 2 | 0 | 1 | | 1 | 1 | 1 | | 1 |
| **nach Wärmelagerung** | | | | L | Q | L | Q | | L | Q | L | | Q |
| **Dauerbiegefestigke it RT 100.000T** | | | Note 2 | 2 | 2 | 0/0/1 | 0 | | 0 | 0 | 1 | | 1 |
| **Dauerbiegefestigke it -20°C 10.000T** | | | Note 2 | 2/2/4 | 3/3/4 | 2 | 2/2/3 | | 2 | 2 | 2 | | 2 |

## Patentansprüche

1. Verbundgebilde, umfassend in dieser Reihenfolge
- eine Trägerschicht,
- eine wasserbasierte Primerschicht, und
- eine Excimer-Lackschicht.

2. Verbundgebilde gemäß Anspruch 1, **dadurch gekennzeichnet, dass** die Trägerschicht eine Kunststofffolie, insbesondere eine PVC, PUR, TPO und/oder TPU-Folie, umfasst.

3. Verbundgebilde gemäß einem der vorherigen Ansprüche, **dadurch gekennzeichnet, dass** die wasserbasierte Primerschicht mindestens ein Polyurethan, mindestens ein Acrylatpolymer und/oder mindestens ein Copolymer davon enthält.

4. Verbundgebilde gemäß einem der vorherigen Ansprüche, **dadurch gekennzeichnet, dass** die wasserbasierte Primerschicht mindestens ein Mattierungsmittel, vorzugsweise ein siliziumbasiertes Mattierungsmittel, umfasst.

5. Verbundgebilde gemäß einem der vorherigen Ansprüche, **dadurch gekennzeichnet, dass** die wasserbasierte Primerschicht mindestens ein Additiv ausgewählt aus der Gruppe, umfassend Entschäumungsmitteln, Verlaufmitteln und Photoinitiatoren, umfasst.

6. Verbundgebilde gemäß einem der vorherigen Ansprüche, **dadurch gekennzeichnet, dass** die Excimer-Lackschicht mindestens einen Excimer- Lack umfasst.

7. Verbundgebilde gemäß einem der vorherigen Ansprüche, **dadurch gekennzeichnet, dass** die Excimer-Lackschicht als Additiv mindestens ein Polymerisationsprodukt mindestens eines Monomeren umfasst, wobei das mindestens eine Monomer ein Butylcyclohexylacrylat, ein Tripopylenglykoldiacrylat, ein Methylacrylat, ein Hexandioldiacrylat, ein 4-tert-Butylcyclohexylacrylat, ein Tripropylenglycoldiacrylat, ein (5-Ethyl-1,3-dioxan-5-yl)methylacrylat, ein ethoxyliertes 1,6-Hexanedioldiacrylat, ein Neopentylglycol[2PO]diacrylat und/oder Trimethylolpropan [15EO] Triacrylat, ein Urethanacrylat Monomer und/oder ein Siliconacrylat Monomer umfasst.

8. Verbundgebilde gemäß einem der vorherigen Ansprüche, **dadurch gekennzeichnet, dass** das Flächengewicht der Excimer-Lackschicht 4,0 bis 10,0 g/m², vorzugsweise 5,0 bis 9,0 g/m², bevorzugter 6,5 bis 7,5 g/m² beträgt.

9. Verbundgebilde gemäß einem der vorherigen Ansprüche, **dadurch gekennzeichnet, dass** es eine matte Oberfläche mit einem Glanzgrad (GG) kleiner als 5 (60°) und kleiner als 10 (85°), vorzugsweise ohne zusätzliche Präge, aufweist.

10. Verfahren zur Herstellung eines Verbundgebildes gemäß irgendeinem der Ansprüche 1 - 9, umfassend die Schritte
- Bereitstellen einer Trägerschicht,
- Aufbringen eines wasserbasierten Primers auf eine Oberfläche der Trägerschicht,
- Aushärten des wasserbasierten Primers, um eine ausgehärtete Primerschicht auszubilden,
- Aufbringen eines Excimer-Lacks auf die ausgehärtete Primerschicht, und
- Aushärten des Excimer-Lacks.

11. Verfahren gemäß Anspruch 10, dadruch gekennzeichnet, dass der wasserbasierte Primer mindestens 50%, vorzugsweise mindestens 60% und ganz besonders bevorzugt 65 bis 70% Wasser, bezogen auf das Gesamtgewicht des wässrigen Primers, umfasst.

12. Verfahren gemäß Anspruch 10 oder 11, wobei die Aushärtung des wasserbasierten Primers eine UV-Bestrahlung und/oder eine thermische Trocknung umfasst.

13. Verfahren gemäß den Ansprüchen 10 bis 12, wobei das Aushärten des Excimer-Lacks folgende Schritte umfasst:
- Bestrahlung der Lackoberfläche mit einem Excimer-Laser, und
- Bestrahlung des Excimer-Lacks mit UV-, LED- und/oder ESH-Strahlung.

14. Verbundgebilde, erhältlich durch das Verfahren gemäß einem der Ansprüche 10 bis 13.

15. Verwendung eines Verbundgebildes gemäß irgendeinem der Ansprüche 1 bis 9 oder Anspruch 14 als Bespannungsmaterial im Automobilinterieur, für medizinische Ligen, für Fitnessgeräte, für Bänke, für Stühle, für Polstermöbel, sowie geprägten und/oder harten Substraten.
